# EUROPEAN PATENT APPLICATION

(11) **EP 1 894 810 A2**
(43) Date of publication of application: **05.03.2008**
(21) Application number: 07111838.4
(22) Date of filing: 05.07.2007
(51) Int. Cl.: B62B 7/08

(54) **Folding baby carriage**

(30) Priority: 04.09.2006 CN 200620076331 U
(71) Applicant: Petite Star Products Limited, WD25 7SE Hertfordshire Watford (GB); Suzhou Vigorkids Child Products Co. Ltd., 215121 Jiangsu Suzhou (CN)
(72) Inventor: Li, Weiqiong Room4-304 Shanxin Residential Quarter, Kunshan City Jiangsu 215300 (CN)
(74) Representative: Kensett, John Hinton

(57) **Abstract**

There is disclosed a folding baby carriage, which is characterized in comprising a bottom support (1) and a front support (2) of a U shape with the opening backward; the bottom support comprises a bottom plastic part (3) at the front end and two bottom branch pipes (4) vertically pin-jointed to the bottom plastic part; a wheel (5) is installed at the lower part of the bottom plastic part (3) and the rear end of the bottom branch pipe (4), respectively; the front support (2) comprises a front plastic part (6) at the front end and two front branch pipes (7) vertically pin-jointed to the front plastic part; the bottom plastic part (3) is transversely pin-jointed to the front plastic part (6); the two front branch pipes (7) are pin-jointed at the rear end with a push rod (9) through an upper joint (8), respectively; the forepart of the push rod extends forward and is located at the lower part of the front branch pipe (7), and the push rod is provided at the front end with a lower joint (10) that is locked with the front branch pipe (7); an X-shaped support (11) is pin-jointed between the two lower joints (10) and the bottom branch pipe (4); and the carriage can be folded not only front and rear, but also left and right, with a smaller volume after folding and less interference during folding, making it more convenient to place and carry.

## Description

### FIELD OF THE INVENTION

The present invention relates to a folding baby carriage.

### BACKGROUND OF THE INVENTION

The baby carriages currently available on the market generally comprise a frame with a lifting bag, a basket or a seat; the frame is provided with a front wheel component at the front bottom and a rear wheel component at the rear bottom; the frame comprises two side frames symmetrically positioned on the left and right, and a multiple of cross bars connected in between thereof; each side frame comprises a front wheel support, a rear wheel support and a push-hold rod; and the frame can be locked when the carriage is unfolded.

The disadvantages of such a carriage are as follows:
1. The whole structure basically comprises the two pieces of frames on the left and right, which can be folded only front and rear instead of left and right, with a still large volume after folding that is inconvenient to place and carry.
2. The frame structure is relatively complicated, and the multiple of cross bars connected and fixed between the two pieces of frames on the left and right will result in more interference during folding, making it troublesome to use.

### CONTENTS OF THE INVENTION

A purpose of the present invention is to provide a folding baby carriage, which can be folded not only front and rear, but also left and right, with a smaller volume after folding and less interference during folding, making it more convenient to place and carry.

According to the present invention, there is provided a folding baby carriage, wherein it comprises a bottom support and a front support of a U shape with the opening backward; the bottom support comprises a bottom part at the front end and two bottom branch pipes pin-jointed to the bottom part; a wheel is installed at the lower part of the bottom part and the rear end of the bottom branch pipe, respectively; the front support comprises a front part at the front end and two front branch pipes pin-jointed to the front part; the bottom part is pin-jointed to the front part; the two front branch pipes are pin-jointed at the rear end with a push rod through an upper joint, respectively; the forepart of the push rod extends forward and is located at the lower part of the front branch pipe; the push rod is provided at the front end with a lower joint that is locked with the front branch pipe; and an X-shaped support is pin-jointed between the two lower joints and the bottom branch pipe.

In a further aspect, the invention provides a folding baby carriage, which is characterized in comprising a bottom support and a front support of a U shape with the opening backward; the bottom support comprises a bottom plastic part at the front end and two bottom branch pipes vertically pin-jointed to the bottom plastic part; a wheel is installed at the lower part of the bottom plastic part and the rear end of the bottom branch pipe, respectively; the front support comprises a front plastic part at the front end and two front branch pipes vertically pin-jointed to the front plastic part; the bottom plastic part is transversely pin-jointed to the front plastic part; the two front branch pipes are pin-jointed at the rear end with a push rod through an upper joint, respectively; the forepart of the push rod extends forward and is located at the lower part of the front branch pipe; the push rod is provided at the front end with a lower joint that is locked with the front branch pipe; and an X-shaped support is pin-jointed between the two lower joints and the bottom branch pipe.

The invention further provides a folding baby carriage, which is characterized in comprising a bottom support and a front support of a U shape with the opening backward; the bottom support comprises a bottom plastic part at the front end and two bottom branch pipes vertically pin-jointed to the bottom plastic part; a wheel is installed at the lower part of the bottom plastic part and the rear end of the bottom branch pipe, respectively; the front support comprises a front plastic part at the front end and two front branch pipes vertically pin-jointed to the front plastic part; the bottom plastic part is transversely pin-jointed to the front plastic part; the two front branch pipes are pin-jointed at the rear end with a push rod through an upper joint, respectively; the forepart of the push rod extends forward and is located at the lower part of the front branch pipe, the push rod is provided at the front end with a lower joint that is locked with the front branch pipe; an X-shaped support is pin-jointed between the two lower joints and the bottom branch pipe; a groove opening upward is provided at the lower part of the front branch pipe and the front end of the push rod; the push rod is provided in the front end opening with a locking slide block, which can be embedded into the groove; the locking slide block is provided at the rear end with a spring, which is fixed in the intercavity of the push rod with an adjusting pin; the locking slide block is connected at the rear end with a pulling rope, which is connected at the rear end with a folding handle, which is located inside a tube in the rear of the push rod; the folding handle is provided at the outer side with a toggle block; and the push rod corresponding to position of the toggle block is provided with a toggle hole.

In one aspect, a more detailed technical solution of the present invention is as follows: The two front branch pipes are vertically pin-jointed to the front plastic part; the bottom plastic part is transversely pin-jointed to the front plastic part; the two front branch pipes are pin-jointed at the rear end with a push rod through an upper joint, respectively; the forepart of the push rod extends forward and is located at the lower part of the front branch pipe; the push rod is provided at the front end with a lower joint that is locked with the front branch pipe; an X-shaped support is pin-jointed between the two lower joints and the bottom branch pipe; a groove opening upward is provided at the lower part of the front branch pipe and the front end of the push rod; the push rod is provided in the front end opening with a locking slide block, which can be embedded into the groove; the locking slide block is provided at the rear end with a spring, which is fixed in the intercavity of the push rod with an adjusting pin; the locking slide block is connected at the rear end with a pulling rope, which is connected at the rear end with a folding handle, which is located inside a tube in the rear of the push rod; the folding handle is provided at the outer side with a toggle block; the push rod corresponding to position of the toggle block is provided with a toggle hole; the two push rods are pin-jointed between the rear parts with a folding support rod, which is provided in the middle with a conjunction cover, which is provided with a folding button; and the two bottom branch pipes are pin-jointed between the rear parts with a folding bottom support rod, between which and the bottom plastic part is a connecting rod connected.

Advantages of the present invention are as follows:
1. The present invention can be folded not only front and rear, but also left and right, with a smaller volume after folding and less interference during folding, making it more convenient to place and carry.
2. The bottom support and the front support are all of a U shape, and the X-shaped support is pin-jointed between the bottom support and the front support, thus avoiding transverse interference during folding.

In a further aspect, the invention provides a baby carriage comprising any one or more of the novel features or combinations of features discloses herein.

### BRIEF DESCRIPTION OF THE DRAWINGS

Embodiments of the invention will now be described below with reference to, and as illustrated by, the accompanying schematic drawings, in which:
Figure 1 is a schematic drawing;
Figure 2 is a front view;
Figure 3 is a rear view;
Figure 4 is a left view;
Figure 5 and Figure 6 are right views (with a partial sectional view);
Figure 7 is a partial enlarged drawing of Figure 6;
Figure 8 is a bottom view; and
Figure 9 is a schematic drawing in a semi-folding state.

Where: 1 bottom support; 2 front support; 3 bottom plastic part; 4 bottom branch pipe; 5 wheel; 6 front plastic part; 7 front branch pipe; 8 upper joint; 9 push rod; 10 lower joint; 11 X-shaped support; 12 folding support rod; 13 folding button; 14 folding bottom support rod; 15 connecting rod; 16 groove; 17 locking slide block; 18 spring; 19 adjusting pin; 20 folding handle; 21 toggle block; 22 toggle hole; 23 pulling rope; 24 conjunction cover.

### DETAILED DESCRIPTION OF THE EMBODIMENTS

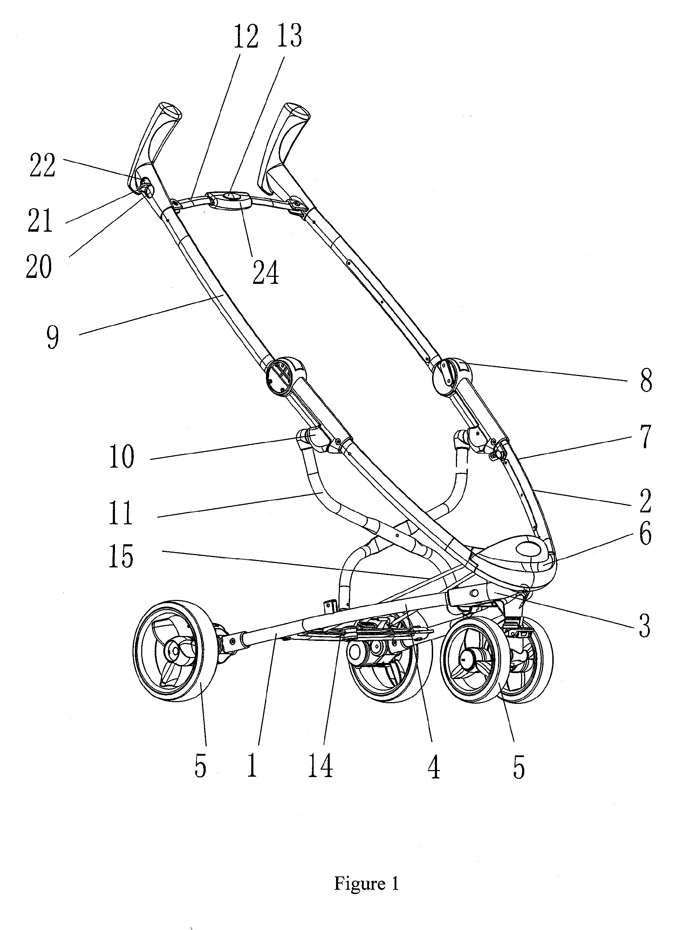

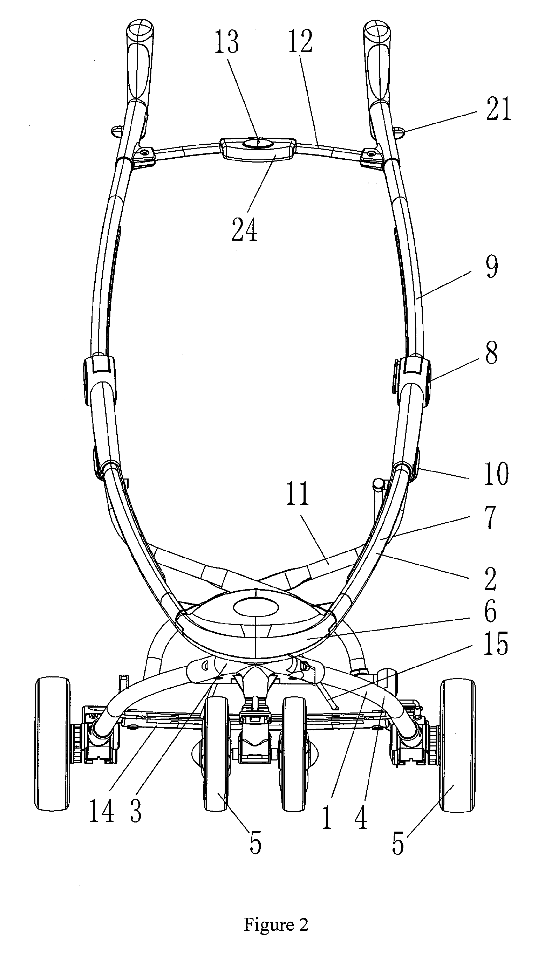

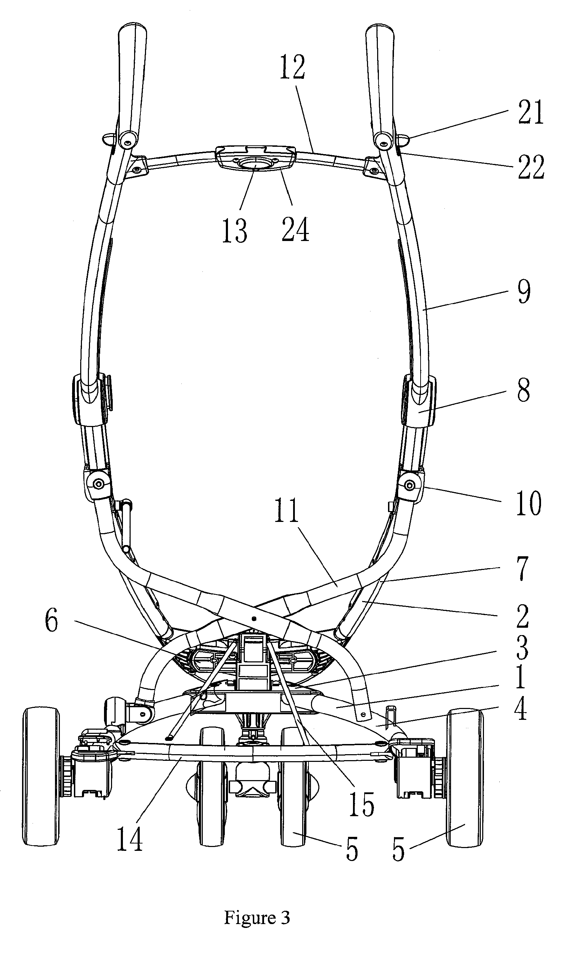

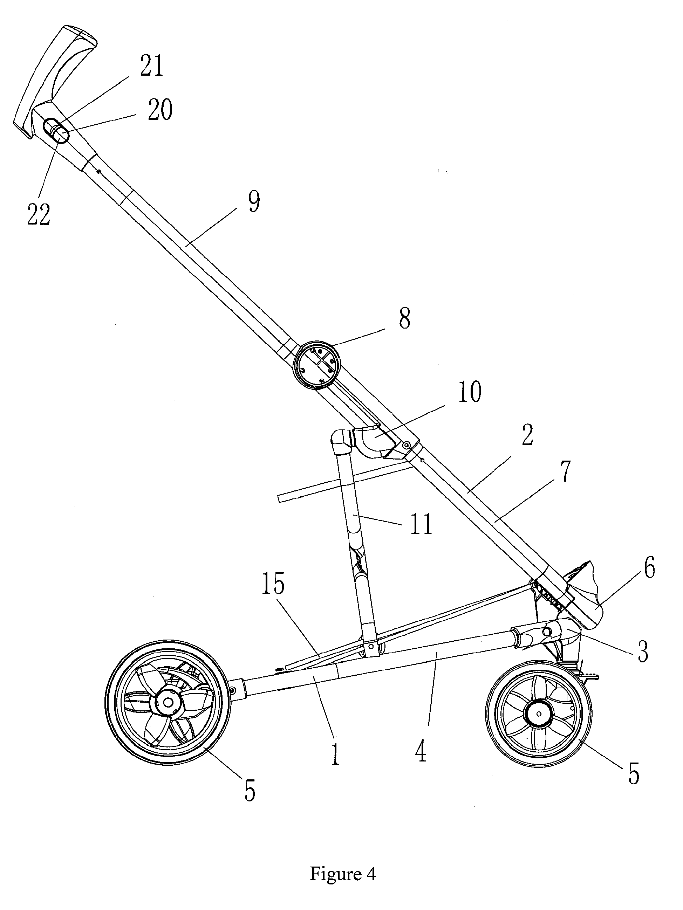

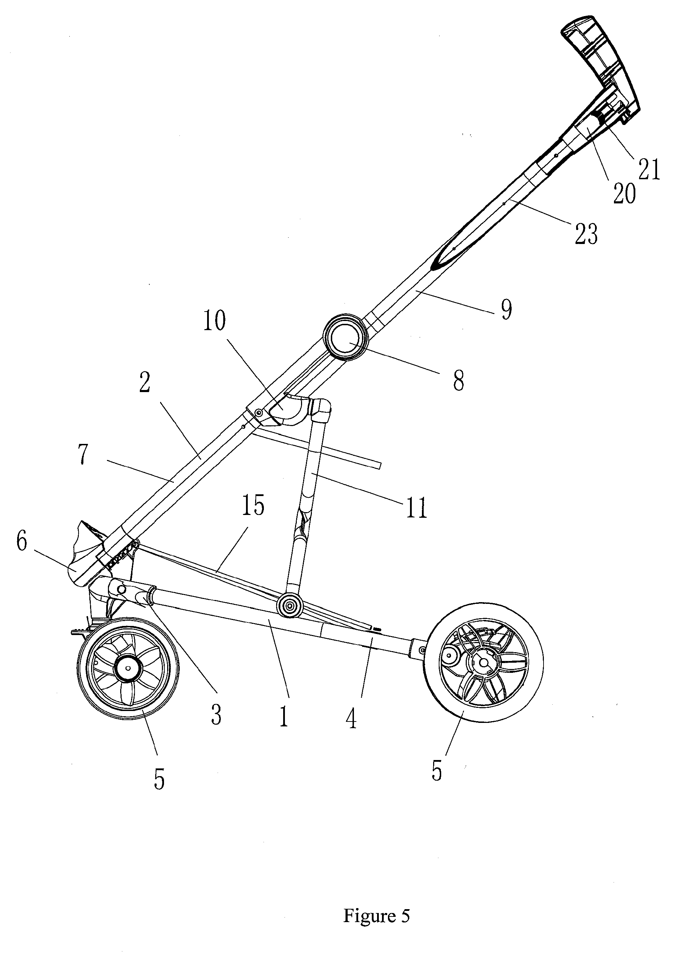

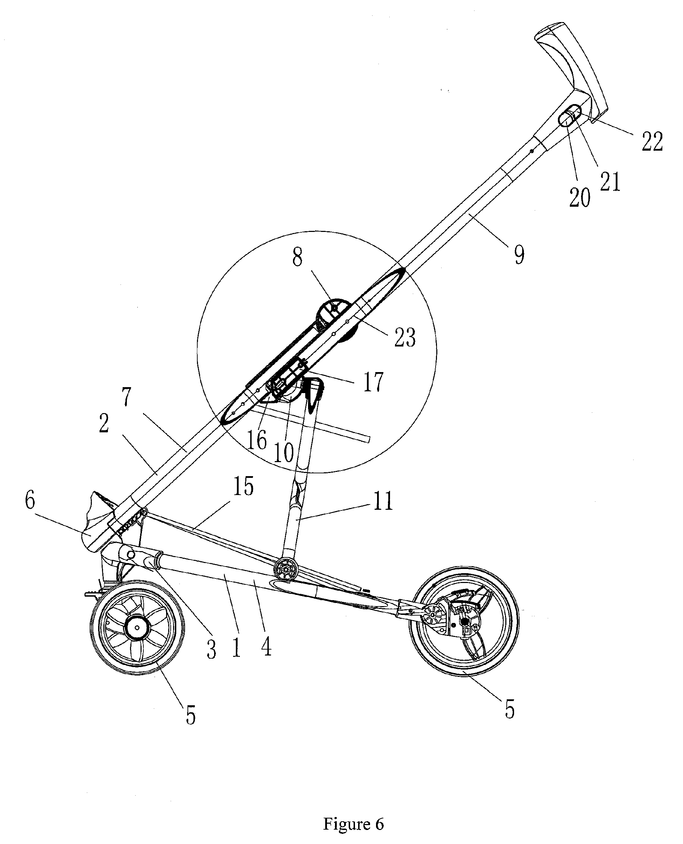

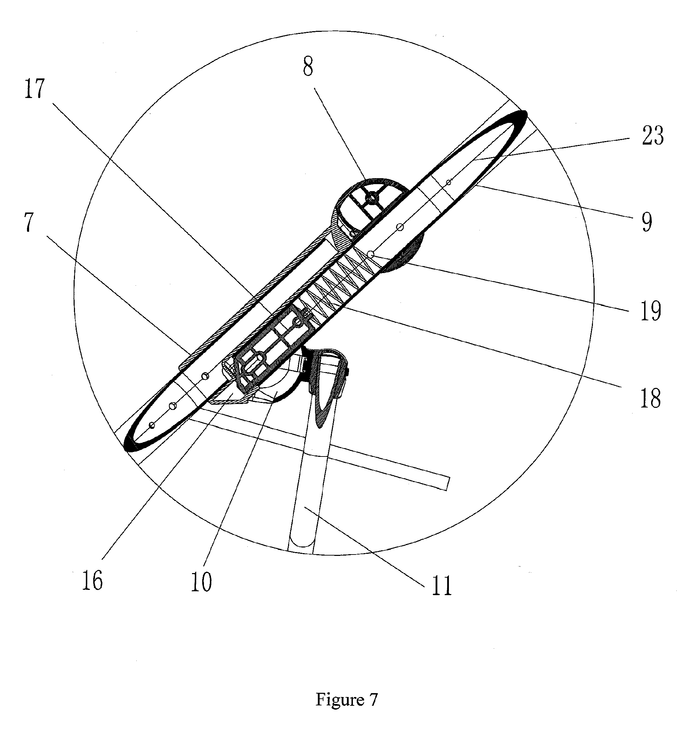

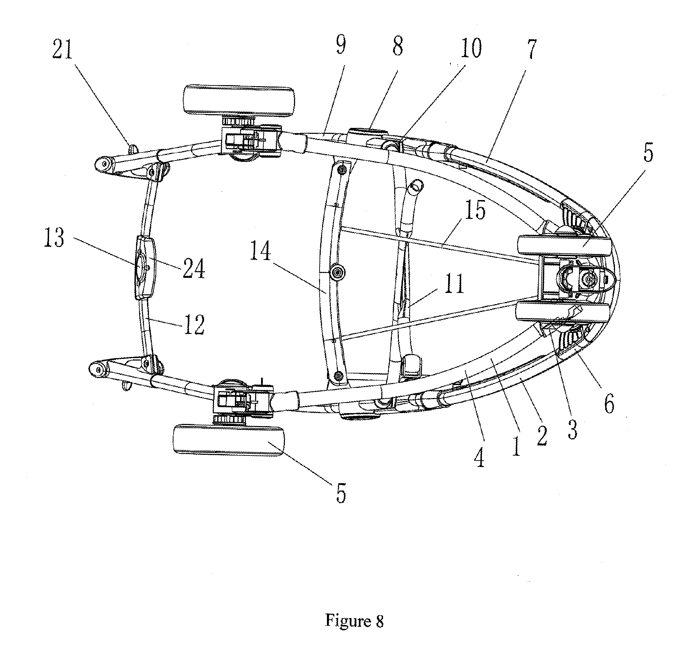

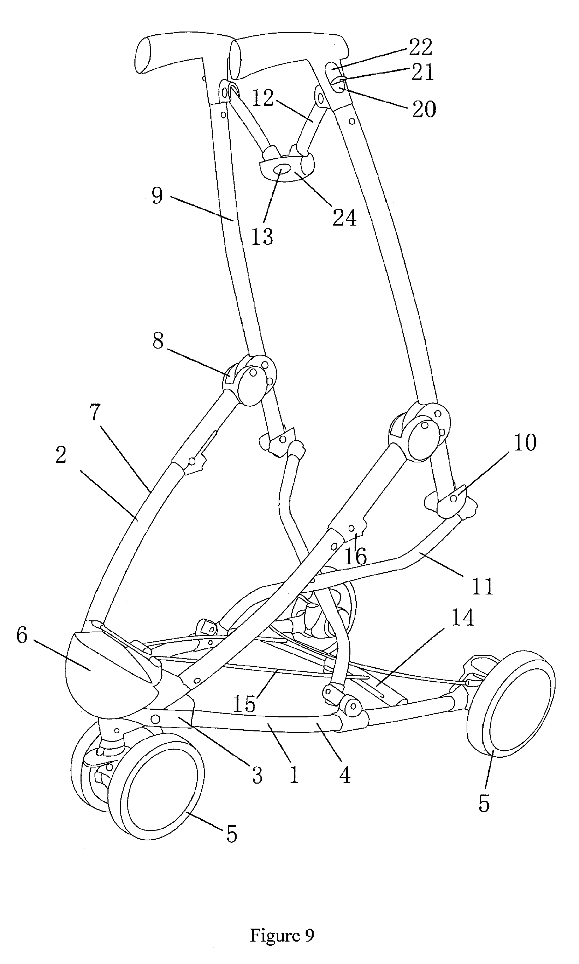

Embodiment: A folding baby carriage as shown in Figure 1, Figure 2, Figure 3, Figure 4, Figure 5, Figure 6, Figure 7, Figure 8, and Figure 9, comprising a bottom support 1 and a front support 2 of a U shape with the opening backward.

The bottom support 1 comprises a bottom plastic part 3 at the front end and two bottom branch pipes 4 vertically pin-jointed to the bottom plastic part 3; a wheel 5 is installed at the lower part of the bottom plastic part 3 and rear end of the bottom branch pipe 4, respectively; and the two bottom branch pipes 4 are pin-jointed between the rear parts with a folding bottom support rod 14, between which and the bottom plastic part 3 is a connecting rod 15 connected.

The front support 2 comprises a front plastic part 6 at the front end and two front branch pipes 7 vertically pin-jointed to the front plastic part 6; the bottom plastic part 3 is transversely pin-jointed to the front plastic part 6; the two front branch pipes 7 are pin-jointed at the rear end with a push rod 9 through an upper joint 8, respectively; the forepart of the push rod 9 extends forward and is located at the lower part of the front branch pipe 7; the push rod 9 is provided at the forepart with a lower joint 10 that is locked with the front branch pipe 7; an X-shaped support 11 is pin-jointed between the two lower joints 10 and the bottom branch pipe 4; and the two push rods 9 are pin-jointed between the rear parts with a folding support rod 12, which is provided in the middle with a conjunction cover 24, which is provided with a folding button 13.

A groove opening upward is provided at the lower part of the front branch pipe 7 and the front end of the push rod 9; the push rod 9 is provided in the front end opening with a locking slide block 17, which can be embedded into the groove 16; the locking slide block 17 is provided at the rear end with a spring 18, which is fixed in the intercavity of the push rod 9 with an adjusting pin 19; the locking slide block 17 is connected at the rear end with a pulling rope 23, which is connected at the rear end with a folding handle 20, which is located inside a tube in the rear of the push rod 9; the folding handle 20 is provided at the outer side with a toggle block 21; and the push rod 9 corresponding to position of the toggle block 21 is provided with a toggle hole 22.

To fold a carriage, press and hold the folding button 13 to bend the folding support rod 12, and then lift the toggle block 21 on the folding handle 20 on both sides of the push rod 9; under the pull of the pulling rope 23, the locking slide block 17 slides upward; and when the locking slide block 17 completely leaves the groove 16 below the front branch pipe 7, apply a forward force to the push rod 9, and the carriage can then be folded.

To unfold a carriage, lift and pull the push rod 9to make it separate from the front support 2; the lower part of the locking slide block 17 is tangent with the lower part of the front branch pipe 7; under the pressure of the spring 18, the locking slide block 17 slides into and fixes in the groove 16 below the front branch pipe 7; and lift the conjunction cover 24 to pull straight the folding support rod 12, and the carriage can then be completely unfolded and locked.

The present carriage can be folded not only front and rear, but also left and right, with a smaller volume after folding and less interference during folding, making it more convenient to place and carry; and the bottom support 1 and the front support 2 are all of a U shape, and the X-shaped support 11 is pin-jointed between the bottom support 1 and the front support 2, thus avoiding transverse interference during folding.

The components may be of other materials to those described.

## Claims

1. A folding baby carriage, wherein it comprises a bottom support (1) and a front support (2) of a U shape with the opening backward; the bottom support (1) comprises a bottom part (3) at the front end and two bottom branch pipes (4) pin-jointed to the bottom part (3); a wheel (5) is installed at the lower part of the bottom part (3) and the rear end of the bottom branch pipe (4), respectively; the front support (2) comprises a front part (6) at the front end and two front branch pipes (7) pin-jointed to the front part (6); the bottom part (3) is pin-jointed to the front part (6); the two front branch pipes (7) are pin-jointed at the rear end with a push rod (9) through an upper joint (8), respectively; the forepart of the push rod (9) extends forward and is located at the lower part of the front branch pipe (7); the push rod (9) is provided at the front end with a lower joint (10) that is locked with the front branch pipe (7); and an X-shaped support (11) is pin-jointed between the two lower joints (10) and the bottom branch pipe (4).

2. A folding baby carriage as claimed in Claim 1, wherein the bottom part (3) is plastic.

3. A folding baby carriage as claimed in Claim 1 or 2, wherein the front part (6) is plastic.

4. A folding baby carriage as claimed in any of Claims 1 to 3, wherein the bottom branch pipes (4) are vertically pin-jointed to the bottom part (3).

5. A folding baby carriage as claimed in any preceding claim, wherein the front branch pipes (7) are transversely pin-jointed to the front part (6).

6. The folding baby carriage according to any preceding claim, wherein a groove (16) opening upward is provided at the lower part of the front branch pipe (7) and the front end of the push rod (9); the push rod (9) is provided in the front end opening with a locking slide block (17), which can be embedded into the groove (16); the locking slide block (17) is provided at the rear end with a spring (18), which is fixed in the intercavity of the push rod (9) with an adjusting pin (19); the locking slide block (17) is connected at the rear end with a pulling rope (23), which is connected at the rear end with a folding handle (20), which is located inside a tube in the rear of the push rod (9); the folding handle (20) is provided at the outer side with a toggle block (21); and the push rod (9) corresponding to position of the toggle block (21) is provided with a toggle hole (22).

7. The folding baby carriage according to any preceding claim, wherein the two push rods (9) are pin-jointed between the rear parts with a folding support rod (12), which is provided in the middle with a conjunction cover (24), which is provided with a folding button (13).

8. The folding baby carriage according to any preceding claim, wherein the two bottom branch pipes (4) are pin-jointed between the rear parts with a folding bottom support rod (14), between which and the bottom plastic part (3) is a connecting rod (15) connected.
